# EUROPÄISCHE PATENTSCHRIFT

(11) **EP 2 774 667 B1**
(45) Veröffentlichungstag und Bekanntmachung des Hinweises auf die Patenterteilung: **04.04.2018**
(21) Anmeldenummer: 14154477.5
(22) Anmeldetag: 10.02.2014
(51) Int. Cl.: B01D 46/10

(54) **Filter, Filterelement und Filtergehäuse**
Filter, filter element and filter housing
Filtres, élément de filtre et boîtier de filtre

(30) Priorität: 06.03.2013 DE 102013003753
(43) Veröffentlichungstag der Anmeldung: 10.09.2014
(73) Patentinhaber: MANN + HUMMEL GMBH, 71638 Ludwigsburg (DE)
(72) Erfinder: Wagner, Fabian, 71696 Möglingen (DE)

(56) Entgegenhaltungen:
- US-A1- 2009 151 311
- US-A1- 2010 258 493

## Beschreibung

### Technisches Gebiet

Die Erfindung betrifft einen Filter für Fluid, insbesondere Luft, Öl, Wasser, Kraftstoff oder Harnstofflösung, insbesondere einer Brennkraftmaschine, insbesondere eines Kraftfahrzeugs.

Ferner betrifft die Erfindung ein Filterelement eines Filters für Fluid, insbesondere Luft, Öl, Wasser, Kraftstoff oder Harnstofflösung, insbesondere einer Brennkraftmaschine, insbesondere eines Kraftfahrzeugs.

Außerdem betrifft die Erfindung ein Filtergehäuse eines Filters für Fluid, insbesondere Luft, Öl, Wasser, Kraftstoff oder Harnstofflösung, insbesondere einer Brennkraftmaschine, insbesondere eines Kraftfahrzeugs.

### Stand der Technik

Aus US 2010/258493 A1 ist ein Filterdichtungssystem mit einer Schnittstelle mit bogenförmigen Buckeln auf einer Seite einer Dichtung bekannt. Aus US 2009/151311 A1 ist ein Filterarrangement mit einer umlaufenden Profildichtung bekannt. Ein vom Markt her bekannter Luftfilter einer Brennkraftmaschine eines Kraftfahrzeugs weist ein Filtergehäuse auf, in dem ein austauschbares Filterelement angeordnet ist.

Der Erfindung liegt die Aufgabe zugrunde, einen Filter, ein Filterelement und ein Filtergehäuse eines Filters der eingangs genannten Art auszugestalten, bei dem eine betriebssichere Positionierung des Filterelements in dem Filtergehäuse verbessert wird.

### Offenbarung der Erfindung

Diese Aufgabe wird erfindungsgemäß gelöst durch ein öffenbares Filtergehäuse, mit einem ersten Filtergehäuseteil, das eine Einbauöffnung für ein austauschbares Filterelement aufweist, die mit einem zweiten Filtergehäuseteil verschlossen werden kann, wobei das erste Filtergehäuseteil eine erste Dichtungsfläche und das zweite Filtergehäuseteil eine mit der ersten Dichtungsfläche zusammenwirkende zweite Dichtungsfläche aufweist, und das Filterelement eine bezüglich einer Filterachse umfangsmäßig verlaufende und sich radial erstreckende Dichtung aufweist, welche bei korrekt in dem Filtergehäuse eingebautem Filterelement axial zur Filterachse betrachtet zwischen der ersten Dichtungsfläche und der zweiten Dichtungsfläche angeordnet ist, und die Dichtung wenigstens eine Positionierkontur umfasst, bei der ein Verlauf der Dichtung wenigstens in einem Abschnitt eine zur Filterachse axiale Richtungskomponente aufweist, und die erste Dichtungsfläche und die zweite Dichtungsfläche jeweils eine entsprechende Positioniergegenkontur umfasst, die bei korrekt eingebautem Filterelement die wenigstens eine Positionierkontur aufnehmen.

Erfindungsgemäß umfasst die Dichtung also wenigstens eine Positionierkontur, welche eine etwaige Symmetrie von mit dem Filtergehäuse zusammenwirkenden Geometrien des Filterelements stört. Auf diese Weise kann erreicht werden, dass das Filterelement nur in vorgegebenen Einbaupositionen, bevorzugt lediglich in einer einzigen vorgegebenen Einbauposition, in das Filtergehäuse eingebaut werden kann, in der die wenigstens eine Positionierkontur in Orientierung und Position mit den beiden entsprechenden Positioniergegenkonturen des Filtergehäuses übereinstimmt. Ferner kann so erreicht werden, dass der fälschliche Einbau eines Filterelements, welches nicht über die passende wenigstens eine Positionierkontur verfügt, frühzeitig erkannt, vorzugsweise verhindert, werden kann. Auf diese Weise wird insgesamt die Betriebssicherheit des Filters vergrößert. Insbesondere bei der Verwendung des Filters als Luftfilter einer Brennkraftmaschine kann es erforderlich sein, das Filterelement reproduzierbar und genau in dem Filtergehäuse platzieren zu können, um mit einem entsprechenden Sensor, insbesondere einem Heißfilm-Luftmassenmessers (HFM) eine reproduzierbare Betriebsgröße, insbesondere ein Luft-Massenstromsignal, realisieren zu können.

Durch die wenigstens eine Positionierkontur mit einer axialen Richtungskomponente kann ein Platzbedarf radial zur Filterachse verringert werden.

Erfindungsgemäß verlaufen die Dichtung außerhalb der wenigstens einen Positionierkontur und die erste Dichtungsfläche und die zweite Dichtungsfläche außerhalb der jeweiligen wenigstens einen Positioniergegenkontur jeweils entlang einer Ebene. Auf diese Weise kann der axiale Bauraumbedarf der Dichtung insgesamt verringert werden. Ferner können ebene Dichtungsflächen und Dichtungen insgesamt einfacher realisiert werden.

Erfindungsgemäß ist die wenigstens eine Positionierkontur als Biegung der Dichtung realisiert. Mit einer Biegung kann einfach eine etwaige Symmetrie der Dichtung unterbrochen werden. Auf diese Weise kann eine eindeutige Einbaulage des Filterelements im Filtergehäuse einfach definiert werden.

Erfindungsgemäß ist ferner, dass die untere Positioniergegenkontur konvex ist und sich über die Ebene, in welcher sich der Rest der unteren Dichtungsfläche befindet, hin erhebt, wobei die obere Dichtungsfläche parallel zur unteren Dichtungsfläche verläuft und wobei die untere Positioniergegenkontur bei korrekt geschlossenem Filtergehäuse in die obere Positioniergegenkontur eingreift und wobei der Verlauf der Positionierkontur und ihre Position bei eingebautem Filterelement dem jeweiligen Verlauf und der Position der unteren Positioniergegenkontur und der oberen Positioniergegenkontur entspricht.

Der Filter kann ein Luftfilter oder ein Innenraumfilter eines Kraftfahrzeugs sein. Es kann auch ein andersartiger Filter, insbesondere für Luft, Öl, Wasser, Kraftstoff oder Harnstofflösung, verwendet werden.

Bei dem Filterelement kann es sich um ein Filterelement mit einem ebenen Faltenbalg und/oder ein Filterelement mit einem Faltenbalg, der unterschiedlich hohe Falten aufweist, handeln. Beispielsweise kann das Filterelement auch als gewickeltes oder geschichtetes Kompaktluftfilterelement ausgebildet sein. Insbesondere ist das Kompaktluftfilterelement aus zumindest einer glatten und einer gewellten Filtermedienlage aufgebaut, die wechselseitig geschlossene Fluidkanäle bilden.

Vorzugsweise umfasst das Filterelement einen umlaufenden Kunststoffrahmen, der beispielsweise an das Filtermedium angespritzt ist. Der Kunststoffrahmen dient als Träger der umlaufenden Dichtung. Die Dichtung kann hierzu an den Kunststoffrahmen angespritzt oder angeknüpft sein. Im Falle eines Filterelements mit einem Faltenbalg dient der Kunststoffrahmen beispielsweise zusätzlich zu seitlichen Abdichtung der Faltentaschen.

Das erste Filtergehäuseteil und/oder das zweite Filtergehäuseteil können jeweils einteilig oder mehrteilig sein. Das Filtergehäuse kann vorteilhafterweise mittels einer Linearbewegung und/oder einer Schwenkbewegung der Filtergehäuseteile relativ zueinander geschlossen und geöffnet werden. Die Filtergehäuseteile können zum Öffnen des Filtergehäuses vollständig voneinander getrennt werden. Alternativ können die Filtergehäuseteile mittels einer flexiblen Verbindung aneinander befestigt sein, so dass sie auch bei offenem Filtergehäuse verliersicher miteinander verbunden bleiben können. Das Filtergehäuse kann auch aus mehr als zwei Filtergehäuseteilen öffenbar zusammengesetzt sein.

Das erste Filtergehäuseteil kann an einem die Einbauöffnung umgebenden freien Rand über einen bezüglich der Filterachse umfangsmäßig verlaufenden ersten Verbindungsflansch verfügen. Der erste Verbindungsflansch kann die erste Dichtfläche umfassen. Das zweite Filtergehäuseteil kann an einem entsprechenden freien Rand über einen bezüglich der Filterachse umfangsmäßig verlaufenden zweiten Verbindungsflansch verfügen. Der zweite Verbindungsflansch kann die zweite Dichtfläche umfassen. Der erste Verbindungsflansch und/oder der zweite Verbindungsflansch können sich vorteilhafterweise am Filtergehäuse radial nach außen erstrecken.

Vorteilhafterweise kann das Filterelement ein Flachfilterelement sein. Das Flachfilterelement kann eben oder gebogen sein. Alternativ kann das Filterelement auch in andersartiger Weise, insbesondere als Rundfilterelement, ovales Rundfilterelement oder konisches Rundfilterelement, realisiert sein. Das Filterelement kann ein zu einem Filterbalg zickzackförmig gefaltetes Filtermedium aufweisen. Alternativ kann der Filterbalg auch ein ungefaltetes Filtermedium aufweisen. Bei einem Flachfilterelement kann der Filterbalg etwa die Form eines Quaders haben. Bei Flachfilterelementen sind die Filtermedien nicht geschlossen, das heißt, bei gefalteten Filterbälgen sind Stirnfalten ebenso wie Stirnkanten nicht miteinander verbunden. Im Unterschied dazu sind bei Rundfilterelementen die Filtermedien geschlossen, das heißt ihre Stirnfalten sind miteinander verbunden. Die Filterachse des Flachfilterelements kann vorteilhafterweise senkrecht zu einer Anströmseite und/oder einer Abströmseite des Filtermediums verlaufen. Die Anströmseite und die Abströmseite können bei einem gefalteten Filtermedium jeweils durch die entsprechenden Faltkanten aufgespannt sein.

Bei einer weiteren vorteilhaften Ausführungsform kann die Dichtung axial zur Filterachse wirken. Das Filterelement kann vorteilhafterweise durch die Einbauöffnung in das erste Filtergehäuseteil eingebaut werden, sodass die Dichtung an der ersten Dichtfläche flächig anliegt. Anschließend kann das zweite Filtergehäuseteil auf dem ersten Filtergehäuseteil montiert werden, sodass die zweite Dichtfläche die Dichtung in axialer Richtung gegen die erste Dichtfläche presst. Eine dabei wirkende Presskraft kann durch entsprechende Befestigungsmittel, insbesondere Schrauben oder Klammern, welche das erste Gehäuseteil mit dem zweiten Gehäuseteil verbinden, erzeugt werden.

Vorteilhafterweise kann die Dichtung zusätzlich oder alternativ auch radial zur Filterachse wirken.

Bei einer weiteren vorteilhaften Ausführungsform kann die Dichtung einen Stabilisierungskern aufweisen. Mit dem Stabilisierungskern kann die Form der Dichtung vorgegeben und stabilisiert werden.

Der Stabilisierungskern kann vorteilhafterweise aus Kunststoff sein. Kunststoff kann einfach auch komplex geformt werden. Auf diese Weise können auch unterschiedliche Formen einfach realisiert werden. Außerdem kann mittels Kunststoff das Gewicht des Stabilisierungskerns entsprechend gering gehalten werden. Mit dem Stabilisierungskern kann ferner verhindert werden, dass durch entsprechende erhöhte Krafteinwirkung beim Zusammenpressen der beiden Dichtflächen bei einem falschen Einbau des Filterelements die Positionierkontur zusammengepresst oder gar zerstört werden kann. Auf diese Weise kann die Einbausicherheit weiter verbessert werden.

Die Dichtung selbst kann vorteilhafterweise aus einem elastischen Material, insbesondere Kunststoff, sein. So kann sich die Dichtung einfach dicht an die Dichtungsflächen anschmiegen. Elastisches Dichtungsmaterial kann auch einfach zwischen den beiden Dichtungsflächen komprimiert werden, sodass die Dichtwirkung verbessert werden kann. Das Dichtungsmaterial kann einfach an den Stabilisierungskern angespritzt sein. Der Stabilisierungskern kann mit dem Dichtungsmaterials umspritzt sein. Die Dichtung kann einteilig sein. Sie kann den Stabilisierungskern vollständig umgeben. Alternativ kann die Dichtung auch mehrteilig sein. Eine mehrteilige Dichtung kann entsprechende Seiten des Stabilisierungskerns abdecken.

Bei einer weiteren vorteilhaften Ausführungsform kann die Dichtung ein Filtermedium des Filterelements radial zur Filterachse überragen. Auf diese Weise kann der Dichtkontakt zwischen der Dichtung und den Dichtungsflächen radial außerhalb des Filtermediums erfolgen. Die Dichtung kann so ohne Überlapp mit der Filterfläche des Filtermediums realisiert werden.

Vorteilhafterweise kann alternativ oder zusätzlich die Dichtung das Filtermedium in axialer Richtung überragen.

Bei einer weiteren vorteilhaften Ausführungsform kann das Filterelement einen Rahmen aufweisen. Mit dem Rahmen kann die Form eines Filtermediums des Filterelements vorgegeben und stabilisiert werden. Außerdem kann der Rahmen eine Haltefunktion ausüben, sodass das Filtermedium, insbesondere ein Filtermediumbalg, stabil in dem Filtergehäuse gehalten werden kann. Vorteilhafterweise kann der Rahmen bezüglich der Filterachse umfangsmäßig verlaufen. Ferner kann vorteilhafterweise der Rahmen umfangsmäßig geschlossen sein. Der Rahmen kann vorteilhafterweise aus Kunststoff sein.

An dem Rahmen kann vorteilhafterweise einfach die Dichtung mittelbar oder unmittelbar befestigt sein. Das Dichtungsmaterial kann vorteilhafterweise mittelbar oder unmittelbar an den Rahmen angespritzt sein. Ein etwaiger Stabilisierungskern kann einfach mit dem Rahmen verbunden sein. Auf diese Weise kann die mechanische Stabilität des Filterelements weiter verbessert werden. Vorteilhafterweise kann der etwaige Stabilisierungskern einstückig mit dem Rahmen verbunden sein.

Bei einer weiteren vorteilhaften Ausführungsform können mehrere Positionierkonturen entlang der Dichtung angeordnet sein. Auf diese Weise kann die Einbaugenauigkeit weiter verbessert werden. Vorteilhafterweise können die Positionierkonturen unsymmetrisch insbesondere bezüglich der Filterachse entlang der Dichtung angeordnet sein.

Bei einer weiteren vorteilhaften Ausführungsform können die wenigstens eine Positionierkontur und die jeweiligen Positioniergegenkonturen in Form und/oder Dimension so aneinander angepasst sein, dass bei einem falschen Einbau des Filterelements die wenigstens eine Positionierkontur einen korrekten Zusammenbau des ersten Filtergehäuseteils und des zweiten Filtergehäuseteils verhindert. So kann schon beim Zusammenbau des Filtergehäuses einfach erkannt werden, dass das Filterelement falsch eingebaut ist oder ein falsches Filterelement verwendet wurde. Auf diese Weise kann die Betriebssicherheit des Filters weiter verbessert werden.

Die technische Aufgabe wird ferner gelöst durch das erfindungsgemäße Filterelement gemäß Anspruch 8, das eine bezüglich einer Filterachse umfangsmäßig verlaufende und sich radial erstreckende Dichtung aufweist, die wenigstens eine Positionierkontur umfasst, bei der ein Verlauf der Dichtung wenigstens in einem Abschnitt eine zur Filterachse axiale Richtungskomponente aufweist. Die oben im Zusammenhang mit dem erfindungsgemäßen Filter und dessen vorteilhafter Ausführungsformen aufgezeigten Vorteile und Merkmale gelten für das erfindungsgemäße Filterelement entsprechend und umgekehrt.

Die technische Aufgabe wird außerdem gelöst durch das erfindungsgemäße öffenbare Filtergehäuse gemäß Anspruch 9, mit einem ersten Filtergehäuseteil, das eine Einbauöffnung für ein austauschbares Filterelement aufweist, die mit einem zweiten Filtergehäuseteil verschlossen werden kann, wobei das erste Filtergehäuseteil eine erste Dichtungsfläche und das zweite Filtergehäuseteil eine mit der ersten Dichtungsfläche zusammenwirkende zweite Dichtungsfläche aufweist, und die erste Dichtungsfläche und die zweite Dichtungsfläche jeweils eine Positioniergegenkontur umfasst, bei der ein Verlauf der ersten Dichtungsfläche und der zweiten Dichtungsfläche wenigstens in einem Abschnitt eine zur Filterachse axiale Richtungskomponente aufweist. Die oben im Zusammenhang mit dem erfindungsgemäßen Filter und dem erfindungsgemäßen Filterelement und deren vorteilhaften Ausführungsformen aufgezeigten Vorteile und Merkmale gelten für das erfindungsgemäße Filtergehäuse entsprechend und umgekehrt.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Luftfilter einer Brennkraftmaschine eines Kraftfahrzeugs mit einem zweiteiligen Luftfiltergehäuse, in dem ein austauschbares Filterelement angeordnet ist;
- Figur 2: eine isometrische Darstellung des Filterelements aus der Figur 1;
- Figur 3: eine Draufsicht des Filterelements aus den Figuren 1 und 2;
- Figur 4: eine längsseitige Ansicht des Filterelements aus den Figuren 1 bis 3;
- Figur 5: einen Querschnitt des Luftfilters aus der Figur 1.

In den Figuren sind gleiche Bauteile mit gleichen Bezugszeichen versehen.

### Ausführungsform(en) der Erfindung

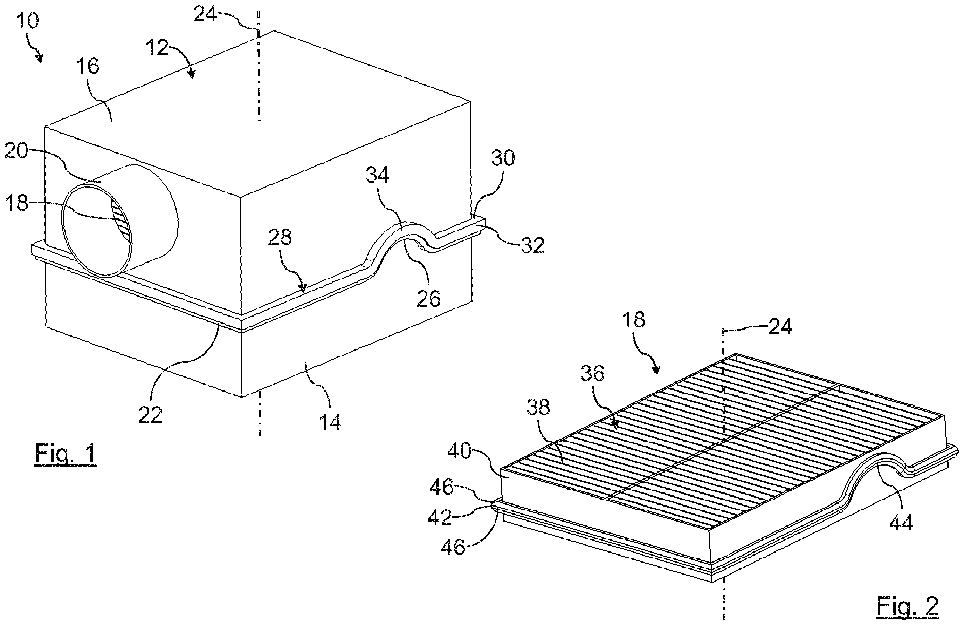

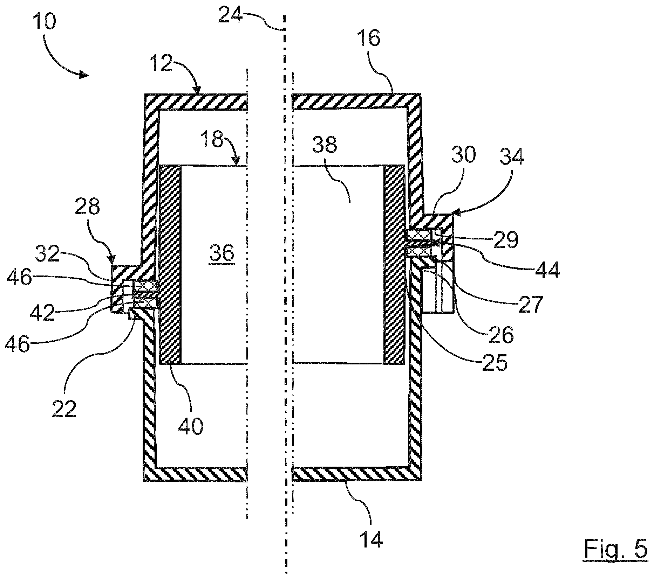

In der Figur 1 ist ein Luftfilter 10 einer Brennkraftmaschine eines Kraftfahrzeugs gezeigt. Figur 5 zeigt den Luftfilter 10 in einem Querschnitt. Der Luftfilter 10 ist in einem ansonsten nicht gezeigten Luftansaugtrakt der Brennkraftmaschine angeordnet. Er dient zur Filtrierung der Verbrennungsluft, welche der Brennkraftmaschine zugeführt wird.

Der Luftfilter 10 umfasst ein Filtergehäuse 12, welches aus einem unteren Filtergehäuseteil 14 und einem oberen Filtergehäuseteil 16 zusammengesetzt ist. Für die Erfindung ist es dabei unerheblich, wie der Luftfilter 10 im Raum orientiert ist. Beispielsweise kann sich das untere Filtergehäuseteil 14 auch räumlich oben und das obere Filtergehäuseteil 16 unten befinden. Das untere Filtergehäuseteil 14 und das obere Filtergehäuseteil 16 sind jeweils etwa quaderförmig.

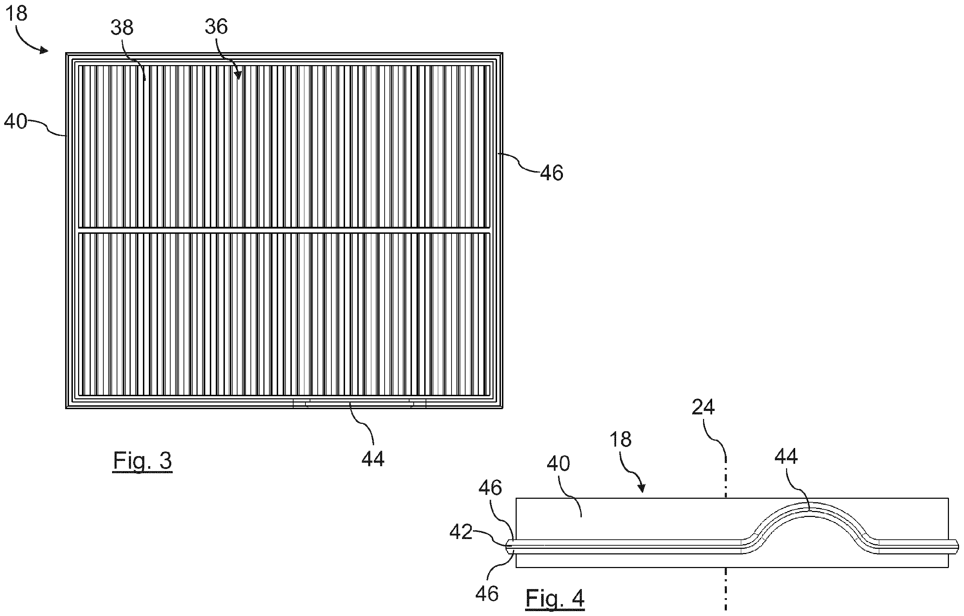

In dem Filtergehäuse 12 ist ein Filterelement 18 so angeordnet, dass es einen Lufteinlass 20 für die zu reinigende Verbrennungsluft, welcher sich im oberen Filtergehäuseteil 16 befindet, von einem Luftauslass für die gereinigte Verbrennungsluft, der sich im unteren Filtergehäuseteil 14 befindet, dicht trennt. Der Luftauslass ist in der Figur 1 verdeckt und daher nicht gezeigt. Das Filterelement 18 ist in den Figuren 2 bis 4 im Detail in unterschiedlichen Perspektiven gezeigt. Der Luftfilter 10 kann auch in umgekehrter Richtung von der Verbrennungsluft durchströmt werden.

Das untere Filtergehäuseteil 14 weist an seinem dem oberen Filtergehäuseteil 16 zugewandten freien Rand einen unteren Anschlussflansch 22 auf. Der untere Anschlussflansch 22 erstreckt sich bezüglich einer gedachten Filterachse 24 umfangsmäßig geschlossen und von den Seitenwänden des unteren Gehäuseteils 14 nach radial außen. Wenn im Folgenden von "axial", "radial" oder "umfangsmäßig" die Rede ist, so bezieht sich dies, sofern nicht anders beschrieben, auf die Filterachse 24.

Der untere Anschlussflansch 22 umgibt eine in der Figur 5 gezeigte Einbauöffnung 25 des unteren Gehäuseteils 14, durch die das Filterelement 18 bei entferntem oberen Filtergehäuseteil 16 in das untere Gehäuseteil 14 eingelegt werden kann. Die Einbauöffnung 25 wird bei geschlossenem Filtergehäuse 12 durch das obere Filtergehäuseteil 16 verschlossen. Bei korrekt montiertem Luftfilter 10 befindet sich etwa ein Drittel der axialen Ausdehnung des Filterelements 18 im unteren Filtergehäuseteil 14. Etwa zwei Drittel der axialen Ausdehnung des Filterelements 18 befindet sich im oberen Filtergehäuseteil 16.

Eine dem oberen Filtergehäuseteil 16 zugewandte untere Dichtungsfläche 27 des unteren Anschlussflansches 22 erstreckt sich im Wesentlichen entlang einer Ebene umfangsmäßig und radial bezüglich der Filterachse 24.

Auf einer Längsseite weist der untere Anschlussflansch 22 eine untere Positioniergegenkontur 26 auf. Die untere Positioniergegenkontur 26 ist in Form einer Biegung realisiert, welche vom oberen Filtergehäuseteil 16 aus in axialer Richtung betrachtet, konvex ist, also eine axiale Richtungskomponente aufweist. Die untere Positioniergegenkontur 26 bildet einen Vorsprung, welcher sich bezüglich der Ebene, in der sich der Rest der unteren Dichtungsfläche 27 befindet, zum oberen Filtergehäuseteil 16 hin erhebt.

Das obere Filtergehäuseteil 16 weist an seinem dem unteren Filtergehäuseteil 14 zugewandten freien Rand einen dem unteren Anschlussflansch 22 entsprechenden oberen Anschlussflansch 28 auf. Der obere Anschlussflansch 28 erstreckt sich ebenfalls umfangsmäßig geschlossen und nach radial außen. Eine dem unteren Anschlussflansch 22 zugewandte Seite eines sich radial und umfangsmäßig erstreckenden Abschnitts 30 des oberen Anschlussflansches 28 bildet eine obere Dichtungsfläche 29. Die obere Dichtungsfläche 29 verläuft parallel zur unteren Dichtungsfläche 27 umfangsmäßig und in radialer Richtung. Sie verläuft im Wesentlichen entlang einer entsprechenden Ebene, welche parallel zur Ebene ist, entlang der sich die untere Dichtungsfläche 27 erstreckt.

Radial außen geht der radiale Abschnitt 30 in einen Rahmenabschnitt 32 über, der sich axial zum unteren Filtergehäuseteil 14 hin erstreckt. Der Rahmenabschnitt 32 umgibt den unteren Anschlussflansch 22 radial außen. Der untere Anschlussflansch 22 wird von dem Rahmenabschnitt 32 eingefasst, positioniert und in lateraler Richtung fixiert.

An einer Längsseite weist der obere Anschlussflansch 28 eine obere Positioniergegenkontur 34 auf, die in Form und Position der unteren Positioniergegenkontur 26 entspricht. Die untere Positioniergegenkontur 26 greift bei korrekt geschlossenem Filtergehäuse 12 in die obere Positioniergegenkontur 34 ein. Durch das Zusammenwirken der Positioniergegenkonturen 26 und 34 kann verhindert werden, dass das obere Filtergehäuseteil 16 in einer falschen Orientierung an das untere Filtergehäuseteil 14 montiert werden kann.

Das Filterelement 18 ist als Flachfilterelement realisiert. Es weist einen insgesamt etwa quaderförmigen Filtermediumbalg 36 aus zickzackförmig gefaltetem Filtermedium 38 auf. Der Filtermediumbalg 36 ist in einem umfangsmäßig geschlossenen Rahmen 40 aus Kunststoff eingefasst. An der radial äußeren Umfangsseite des Rahmens 40 ist einstückig ein Stabilisierungskern 42 in Form eines umfangsmäßig geschlossenen und sich in radialer Richtung nach außen erstreckenden Stegs angeordnet.

Der Stabilisierungskern 42 weist an einer Längsseite eine Biegung zur Bildung einer Positionierkontur 44 auf. Der Verlauf der Positionierkontur 44 und ihre Position bei eingebautem Filterelement 18 entspricht dem jeweiligen Verlauf und der Position der unteren Positioniergegenkontur 26 und der oberen Positioniergegenkontur 34.

Auf der sich in radialer Richtung erstreckenden oberen und unteren Seite des Stabilisierungskerns 42 ist jeweils elastisches Dichtungsmaterial zur Realisierung einer zweiteiligen Dichtung 46 angespritzt. Die Dichtung 46 erstreckt sich entlang des Stabilisierungskerns 42 umfangsmäßig und von der radial äußeren Umfangsseite des Rahmens 40 nach radial außen. Die Dichtung 46 umfasst auch die Positionierungskontur 44.

Bei korrekt montiertem Filterelement 18 befindet sich der Stabilisierungskern 42 mit der Dichtung 46 zwischen der unteren Dichtungsfläche 27 und der oberen Dichtungsfläche 29. Die Dichtung 46 wird dicht zwischen den Dichtungsflächen 27 und 29 axial zusammengepresst. Sie wirkt also axial. Die Positionierkontur 44 wird dabei zwischen der unteren Positioniergegenkontur 26 und der oberen Positioniergegenkontur 34 aufgenommen. Die asymmetrische Anordnung der unteren Positioniergegenkontur 26 und der oberen Positioniergegenkontur 34 am Filtergehäuse 12 und der Positionierkontur 44 am Filterelement 18 stellt sicher, dass das Filterelement 18 nur in der korrekten Einbaulage in das Filtergehäuse 12 eingebaut werden kann. Falls versehentlich das Filterelement 18 verkehrt herum oder bezüglich der Filterachse 24 verdreht in das untere Filtergehäuseteil 14 eingelegt wird, verhindern die Positionierkontur 44 und die Positioniergegenkonturen 26 und 34, dass das untere Filtergehäuseteil 14 und das obere Filtergehäuseteil 16 korrekt zusammengebaut werden können. Das Filtergehäuse 12 kann dann nicht verschlossen werden. Ebenso kann das Filtergehäuse 12 nicht verschlossen werden, falls das eingelegte Filterelement nicht über die korrekte Positionierkontur 44 verfügt. Auf diese Weise kann verhindert werden, dass ein nicht zu dem Filtergehäuse 12 passendes Filterelement verwendet wird.

Bei einer nicht dargestellten alternativen Ausführungsform können zusätzlich zu den Positioniergegenkonturen 26 und 34 und der Positionierkontur 44 wenigstens eine weitere Paarung von Positionierkonturen und Positioniergegenkonturen vorgesehen sein. Die weiteren Konturpaarungen können beispielsweise auf der gegenüberliegenden Längsseite oder einer der Querseiten des Filterelements 18 und der Anschlussflansche 22 und 28 angeordnet sein.

Bei dem oben beschriebenen Ausführungsbeispiel eines Filters 10, eines Filtergehäuses 12 und eines Filterelements 18 sind unter anderem folgende Modifikationen möglich:

Die Erfindung beschränkt sich nicht auf Luftfilter 10 von Brennkraftmaschinen von Kraftfahrzeugen. Vielmehr kann sie auch bei andersartigen Filtern für Fluide, beispielsweise Öl, Wasser, Kraftstoff oder Harnstofflösung, eingesetzt werden. Sie kann auch außerhalb der Kraftfahrzeugtechnik, beispielsweise bei Industriemotoren, verwendet werden. Im Bereich der Kraftfahrzeugtechnik kann die Erfindung auch außerhalb von Brennkraftmaschinen, beispielsweise bei Innenraumfiltern, eingesetzt werden.

Das untere Filtergehäuseteil 14 und das obere Filtergehäuseteil 16 können statt quaderförmig auch andersförmig sein.

Der Filtermediumbalg 36 kann statt aus zickzackförmig gefaltetem Filtermedium 38 auch aus andersartigem, beispielsweise flachem, ungefaltetem Filtermedium sein.

## Patentansprüche

1. Filter (10) für Fluid, insbesondere Luft, Öl, Wasser, Kraftstoff oder Harnstofflösung, insbesondere einer Brennkraftmaschine, insbesondere eines Kraftfahrzeugs, mit einem öffenbaren Filtergehäuse (12), mit einem ersten Filtergehäuseteil (14), das eine Einbauöffnung (25) für ein austauschbares Filterelement (18) aufweist, die mit einem zweiten Filtergehäuseteil (16) verschlossen werden kann, wobei das erste Filtergehäuseteil (14) eine erste Dichtungsfläche (27) und das zweite Filtergehäuseteil (16) eine mit der ersten Dichtungsfläche (27) zusammenwirkende zweite Dichtungsfläche (29) aufweist, und das Filterelement (18) eine bezüglich einer Filterachse (24) umfangsmäßig verlaufende und sich radial erstreckende Dichtung (46) aufweist, welche bei korrekt in dem Filtergehäuse (12) eingebautem Filterelement (18) axial zur Filterachse (24) betrachtet zwischen der ersten Dichtungsfläche (27) und der zweiten Dichtungsfläche (29) angeordnet ist, und die Dichtung (46) wenigstens eine Positionierkontur (44) umfasst, bei der ein Verlauf der Dichtung (46) wenigstens in einem Abschnitt eine zur Filterachse (24) axiale Richtungskomponente aufweist, und die erste **D**ichtungsfläche (27) und die zweite Dichtungsfläche (29) jeweils eine entsprechende Positioniergegenkontur (26, 34) umfasst, die bei korrekt eingebautem Filterelement (18) die wenigstens eine Positionierkontur (44) aufnimmt, wobei die wenigstens eine Positionierkontur (44) als Biegung der Dichtung (46) realisiert ist, **dadurch gekennzeichnet, dass** die Dichtung (46) außerhalb der wenigstens einen Positionierkontur (44) und die erste Dichtungsfläche (27) und die zweite Dichtungsfläche (29) außerhalb der jeweiligen wenigstens einen Positioniergegenkontur (26, 34) jeweils in einer Ebene verlaufen, wobei die untere Positioniergegenkontur (26) konvex ist und sich über die Ebene, in welcher sich der Rest der unteren Dichtungsfläche (27) befindet, hin erhebt, und wobei die obere Dichtungsfläche (29) parallel zur unteren Dichtungsfläche (27) verläuft und wobei die untere Positioniergegenkontur (26) bei korrekt geschlossenem Filtergehäuse (12) in die obere Positioniergegenkontur (34) eingreift und wobei der Verlauf der Positionierkontur (44) und ihre Position bei eingebautem Filterelement (18) dem jeweiligen Verlauf und der Position der unteren Positioniergegenkontur (26) und der oberen Positioniergegenkontur (34) entspricht.

2. Filter nach Anspruch 1, **dadurch gekennzeichnet, dass** die Dichtung (46) axial zur Filterachse (24) wirkt.

3. Filter nach einem der vorigen Ansprüche, **dadurch gekennzeichnet, dass die** Dichtung (46) einen Stabilisierungskern (42) aufweist.

4. Filter nach einem der vorigen Ansprüche, **dadurch gekennzeichnet, dass** die Dichtung (46) ein Filtermedium (38) des Filterelements (18) radial zur Filterachse (24) überragt.

5. Filter nach einem der vorigen Ansprüche, **dadurch gekennzeichnet, dass** das Filterelement (18) einen Rahmen (40) aufweist.

6. Filter nach einem der vorigen Ansprüche, **dadurch gekennzeichnet, dass** mehrere Positionierkonturen entlang der Dichtung angeordnet sind.

7. Filter nach einem der vorigen Ansprüche, **dadurch gekennzeichnet, dass** die wenigstens eine Positionierkontur (44) und die jeweiligen Positioniergegenkonturen (26, 34) in Form und/oder Dimension so aneinander angepasst sind, dass bei einem falschen Einbau des Filterelements (18) die wenigstens eine Positionierkontur (44) einen korrekten Zusammenbau des ersten Filtergehäuseteils (14) und des zweiten Filtergehäuseteils (16) verhindert.

8. Filterelement (18) eines Filters (10) nach einem der vorigen Ansprüche, das eine bezüglich einer Filterachse (24) umfangsmäßig verlaufende und sich radial erstreckende Dichtung (46) aufweist, die in dem Filtergehäuse (12) axial zur Filterachse (24) betrachtet zwischen der ersten Dichtungsfläche (27) und der zweiten Dichtungsfläche (29) des Filtergehäuses (12) anordenbar ist, wobei die Dichtung (46) wenigstens eine Positionierkontur (44) umfasst, bei der ein Verlauf der Dichtung (46) wenigstens in einem Abschnitt eine zur Filterachse (24) axiale Richtungskomponente aufweist, wobei die wenigstens eine Positionierkontur (44) als Biegung der Dichtung (46) realisiert ist, **dadurch gekennzeichnet, dass** die Dichtung (46) außerhalb der wenigstens einen Positionierkontur (44) entlang einer Ebene verläuft, wobei der Verlauf der Positionierkontur (44) und ihre Position bei eingebautem Filterelement (18) dem jeweiligen Verlauf und der Position der unteren Positioniergegenkontur (26) und der oberen Positioniergegenkontur (34) entspricht.

9. Filtergehäuse (12) eines Filters (10) nach einem der Ansprüche 1 bis 7, mit einem ersten Filtergehäuseteil (14), das eine Einbauöffnung (25) für ein austauschbares Filterelement (18) aufweist, die mit einem zweiten Filtergehäuseteil (16) verschlossen werden kann, und das erste Filtergehäuseteil (14) eine erste Dichtungsfläche (27) und das zweite Filtergehäuseteil (16) eine mit der ersten Dichtungsfläche (27) zusammenwirkende zweite Dichtungsfläche (29) aufweist, und die erste Dichtungsfläche (27) und die zweite Dichtungsfläche (29) jeweils eine Positioniergegenkontur (26, 34) umfasst, bei der ein Verlauf der ersten Dichtungsfläche (27) und der zweiten Dichtungsfläche (29) wenigstens in einem Abschnitt eine zur Filterachse (24) axiale Richtungskomponente aufweist wobei die wenigstens eine Positioniergegenkontur (26, 34) als Biegung der Dichtung (46) realisiert ist, **dadurch gekennzeichnet, dass** die erste Dichtungsfläche (27) und die zweite Dichtungsfläche (29) außerhalb der jeweiligen wenigstens einen Positioniergegenkontur (26, 34) jeweils entlang einer Ebene verlaufen, wobei die untere Positioniergegenkontur (26) konvex ist und sich über die Ebene, in welcher sich der Rest der unteren Dichtungsfläche (27) befindet, hin erhebt, und wobei die obere Dichtungsfläche (29) parallel zur unteren Dichtungsfläche (27) verläuft und wobei die untere Positioniergegenkontur (26) bei korrekt geschlossenem Filtergehäuse (12) in die obere Positioniergegenkontur (34) eingreift und wobei das Filterelement derart einbaubar ist, dass der Verlauf der Positionierkontur (44) und ihre Position bei eingebautem Filterelement (18) dem jeweiligen Verlauf und der Position der unteren Positioniergegenkontur (26) und der oberen Positioniergegenkontur (34) entspricht.

## Claims

1. Filter (10) for fluid, in particular air, oil, water, fuel or urea solution, in particular of an internal combustion engine, in particular of a motor vehicle, with an openable filter housing (12), with a first filter housing component (14) featuring a mounting opening (25), which can be closed by means of a second filter housing component (16), for a replaceable filter element (18), wherein the first filter housing component (14) features a first sealing surface (27) and the second filter housing component (16) a second sealing surface (29) interacting with the first sealing surface (27), and the filter element (18) features a circumferentially and radially, relative to a filter axis (24) extending gasket (46) which is disposed between the first sealing surface (27) and the second sealing surface (29) if the filter element (18) is correctly installed in the filter housing (12) viewed axially relative to the filter axis (24), and the gasket (46) comprises at least one positioning contour (44) in which a course of the gasket (46) features at least in one portion a directional component axially relative to the filter axis (24), and the first sealing surface (27) and the second sealing surface (29) comprise each a corresponding positioning counter contour (26, 34) which receives the at least one positioning contour (44) if the filter element (18) is correctly installed, wherein the at least one positioning contour (44) is realized as curvature of the gasket (46), **characterized in that** the gasket (46) outside the at least one positioning contour (44) and the first sealing surface (27) and the second sealing surface (29) outside the respective at least one positioning counter contour (26, 34) extend each in a plane, wherein the lower positioning counter contour (26) is convex and protrudes beyond the plane in which the rest of the lower sealing surface (27) is located, and wherein the upper sealing surface (29) extends parallel to the lower sealing surface (27) and wherein the lower positioning counter contour (26) engages with the upper positioning counter contour (34) if the filter housing (12) is correctly closed, and wherein the course of the positioning contour (44) and its position with the filter element (18) installed correspond to the respective course and position of the lower positioning counter contour (26) and the upper positioning counter contour (34).

2. Filter according to claim 1, **characterized in that** the gasket (46) acts axially to the filter axis (24).

3. Filter according to one of the above claims, **characterized in that** the gasket (46) features a stabilizing core (42).

4. Filter according to one of the above claims, **characterized in that** the gasket (46) protrudes beyond a filter medium (38) of the filter element (18) radially relative to the filter axis (24).

5. Filter according to one of the above claims, **characterized in that** the filter element (18) features a frame (40).

6. Filter according to one of the above claims, **characterized in that** several positioning contours are disposed along the gasket.

7. Filter according to one of the above claims, **characterized in that** the at least one positioning contour (44) and the corresponding positioning counter contours (26, 34) are adapted to each other in shape and/or in dimension in such a way that, when installing the filter element (18) incorrectly, the at least one positioning contour (44) prevents a correct assembly of the first filter housing component (14) and the second filter housing component (16).

8. Filter element (18) of a filter (10) according to one of the above claims featuring a circumferentially and radially, relative to a filter axis (24) extending gasket (46) which can be disposed in the filter housing (12) viewed axially relative to the filter axis (24) between the first sealing surface (27) and the second sealing surface (29) of the filter housing (12), wherein the gasket (46) comprises at least one positioning contour (44) in which a course of the gasket (46) features at least in one portion a directional component axially relative to the filter axis (24), wherein the at least one positioning contour (44) is realized as curvature of the gasket (46), **characterized in that** the gasket (46) outside the at least one positioning contour (44) extends along a plane, wherein the course of the positioning contour (44) and its position with the filter element (18) installed correspond to the respective course and position of the lower positioning counter contour (26) and the upper positioning counter contour (34).

9. Filter housing (12) of a filter (10) according to one of the claims 1 to 7, with a first filter housing component (14) featuring a mounting opening (25), which can be closed by means of a second filter housing component (16), for a replaceable filter element (18) and the first filter housing component (14) features a first sealing surface (27) and the second filter housing component (16) a second sealing surface (29) interacting with the first sealing surface (27), and the first sealing surface (27) and the second sealing surface (29) comprise each a positioning counter contour (26, 34) in which a course of the first sealing surface (27) and of the second sealing surface (29) features at least in one portion a directional component axially relative to the filter axis (24), wherein the at least one positioning counter contour (26, 34) is realized as curvature of the gasket (46), **characterized in that** the first sealing surface (27) and the second sealing surface (29) outside the at least respective one positioning counter contour (26, 34) extend each along a plane, wherein the lower positioning counter contour (26) is convex and protrudes beyond the plane in which the rest of the lower sealing surface (27) is located, and wherein the upper sealing surface (29) extends parallel to the lower sealing surface (27) and wherein the lower positioning counter contour (26) engages with the upper positioning counter contour (34) if the filter housing (12) is correctly closed, and wherein the filter element is mountable in such a way that the course of the positioning contour (44) and its position with the filter element (18) installed corresponds to the respective course and position of the lower positioning counter contour (26) and the upper positioning counter contour (34).

## Revendications

1. Filtre (10) à fluide, en particulier à air, huile, eau, carburant ou solution d'urée, en particulier d'un moteur à combustion interne, en particulier d'un véhicule automobile, avec un boîtier de filtre (12) pouvant être ouvert, avec une première partie de boîtier de filtre (14) qui comporte une ouverture de montage (25) pour un élément filtrant (18) échangeable, cette ouverture pouvant être fermée avec une deuxième partie de boîtier de filtre (16), la première partie de boîtier de filtre (14) comportant une première surface d'étanchéité (27) et la deuxième partie de boîtier de filtre (16) comportant une deuxième surface d'étanchéité (29) interagissant avec la première surface d'étanchéité (27), et l'élément filtrant (18) étant pourvu d'un joint (46) évoluant en sens circonférentiel et s'étendant en sens radial par rapport à un axe de filtre (24), ce joint étant disposé, lorsque l'élément filtrant (18) est monté correctement dans le boîtier de filtre (12), considéré en sens axial par rapport à l'axe de filtre (24), entre la première surface d'étanchéité (27) et la deuxième surface d'étanchéité (29), et le joint (46) comprenant au moins un contour de positionnement (44) sur lequel un cours du joint (46) présente, au moins dans une section, une composante directionnelle axiale par rapport à l'axe de filtre (24), et la première surface d'étanchéité (27) et la deuxième surface d'étanchéité (29) comprenant un contre-contour de positionnement (26, 34) correspondant qui, lorsque l'élément filtrant (18) est monté correctement, réceptionne le contour de positionnement (44), au moins au nombre d'un, le contour de positionnement (44), au moins au nombre d'un, étant réalisé sous forme de courbure du joint (46), **caractérisé en ce que** le joint (46) situé à l'extérieur du contour de positionnement (44), au moins au nombre d'un, et la première surface d'étanchéité (27) et la deuxième surface d'étanchéité (29) situées à l'extérieur du contre-contour de positionnement (26, 34) respectif, au moins au nombre d'un, évoluent sur le même plan, le contre-contour de positionnement inférieur (26) étant convexe et s'élevant au-dessus du plan dans lequel se trouve le reste de la surface d'étanchéité inférieure (27), et la surface d'étanchéité supérieure (29) évoluant de manière parallèle à la surface d'étanchéité inférieure (27) et le contre-contour de positionnement inférieur (26), lorsque le boîtier de filtre (12) est fermé correctement, s'engrenant dans le contre-contour de positionnement supérieur (34) et le cours du contour de positionnement (44) et sa position correspondant, lorsque l'élément filtrant (18) est monté, à la courbure respective et à la position du contre-contour de positionnement inférieur (26) et du contre-contour de positionnement supérieur (34).

2. Filtre selon la revendication 1, **caractérisé en ce que** le joint (46) agit en sens axial par rapport à l'axe de filtre (24).

3. Filtre selon l'une des revendications précédentes, **caractérisé en ce que le** joint (46) présente un noyau de stabilisation (42).

4. Filtre selon l'une des revendications précédentes, **caractérisé en ce que** le joint (46) dépasse d'un milieu filtrant (38) de l'élément filtrant (18) en sens radial par rapport à l'axe de filtre (24).

5. Filtre selon l'une des revendications précédentes, **caractérisé en ce que** l'élément filtrant (18) est doté d'un cadre (40).

6. Filtre selon l'une des revendications précédentes, **caractérisé en ce que** plusieurs contours de positionnement sont disposés le long du joint.

7. Filtre selon l'une des revendications précédentes, **caractérisé en ce que** le contour de positionnement (44), au moins au nombre d'un, et les contre-contours de positionnement (26, 34) respectifs sont assortis les uns aux autres, en termes de forme et/ou de dimension, de sorte qu'en cas de montage incorrect de l'élément filtrant (18), le contour de positionnement (44), au moins au nombre d'un, empêche l'assemblage correct de la première partie de boîtier de filtre (14) et de la deuxième partie de boîtier de filtre (16).

8. Élément filtrant (18) d'un filtre (10) selon l'une des revendications précédentes, lequel est pourvu d'un joint (46) évoluant en sens circonférentiel et s'étendant en sens radial par rapport à un axe de filtre (24), ce joint pouvant être disposé dans le boîtier de filtre (12), considéré en sens axial par rapport à l'axe de filtre (24), entre la première surface d'étanchéité (27) et la deuxième surface d'étanchéité (29) du boîtier de filtre (12), le joint (46) comprenant au moins un contour de positionnement (44) sur lequel un cours du joint (46) présente, au moins dans une section, une composante directionnelle axiale par rapport à l'axe de filtre (24), le contour de positionnement (44), au moins au nombre d'un, étant réalisé sous forme de courbure du joint (46), **caractérisé en ce que** le joint (46) situé à l'extérieur du contour de positionnement (44), au moins au nombre d'un, évolue le long d'un même plan, le cours du contour de positionnement (44) et sa position correspondant, lorsque l'élément filtrant (18) est monté, au cours respectif et à la position du contre-contour de positionnement inférieur (26) et du contre-contour de positionnement supérieur (34).

9. Boîtier de filtre (12) d'un filtre (10) selon l'une des revendications 1 à 7, avec une première partie de boîtier de filtre (14), qui comporte une ouverture de montage (25) pour un élément filtrant (18) échangeable, cette ouverture pouvant être fermée avec une deuxième partie de boîtier de filtre (16), la première partie de boîtier de filtre (14) comporte une première surface d'étanchéité (27) et la deuxième partie de boîtier de filtre (16) comporte une deuxième surface d'étanchéité (29) interagissant avec la première surface d'étanchéité (27), et la première surface d'étanchéité (27) et la deuxième surface d'étanchéité (29) comprennent respectivement un contre-contour de positionnement (26, 34) sur lequel un cours de la première surface d'étanchéité (27) et de la deuxième surface d'étanchéité (29) présente, au moins dans une section, une composante directionnelle axiale par rapport à l'axe de filtre (24), le contre-contour de positionnement (26, 34), au moins au nombre d'un, étant réalisé sous forme de courbure du joint (46), **caractérisé en ce que** la première surface d'étanchéité (27) et la deuxième surface d'étanchéité (29) situées à l'extérieur du contre-contour de positionnement (26, 34) respectif, au moins au nombre d'un, évoluent le long du même plan, le contre-contour de positionnement inférieur (26) étant convexe et s'élevant au-dessus du plan dans lequel se trouve le reste de la surface d'étanchéité inférieure (27), et la surface d'étanchéité supérieure (29) évoluant de manière parallèle à la surface d'étanchéité inférieure (27) et le contre-contour de positionnement inférieur (26), lorsque le boîtier de filtre (12) est fermé correctement, s'engrenant dans le contre-contour de positionnement supérieur (34), et l'élément filtrant pouvant être monté de manière à ce que le cours du contour de positionnement (44) et sa position correspondent, lorsque l'élément filtrant (18) est monté, au cours respectif et à la position du contre-contour de positionnement inférieur (26) et du contre-contour de positionnement supérieur (34).
